# EUROPEAN PATENT APPLICATION

(11) **EP 4 557 562 A1**
(43) Date of publication of application: **21.05.2025**
(21) Application number: 23861682.5
(22) Date of filing: 29.12.2023
(51) Int. Cl.: H02J 7/00, H01M 10/42, H01M 10/44

(54) **BATTERY BALANCING CIRCUIT, ENERGY STORAGE DEVICE, AND ENERGY STORAGE SYSTEM AND BALANCING CONTROL METHOD THEREFOR**

(30) Priority: 27.02.2023 CN 202310216356
(71) Applicant: Huawei Digital Power Technologies Co., Ltd., Shenzhen, Guangdong 518043 (CN)
(72) Inventor: WU, Yihong, Shenzhen, Guangdong 518043 (CN); GUO, Haibin, Shenzhen, Guangdong 518043 (CN); ZHANG, Yifei, Shenzhen, Guangdong 518043 (CN); LI, Huajia, Shenzhen, Guangdong 518043 (CN)
(74) Representative: Gill Jennings & Every LLP
(86) International application number: PCT/CN2023/143116
(87) International publication number: WO 2024/179165

(57) **Abstract**

Embodiments of this application disclose a battery equalization circuit, an energy storage apparatus, an energy storage system, and an equalization control method for the energy storage system. The energy storage apparatus includes a cell group, an auxiliary source, a power consumption management circuit, a main power circuit, and a main control chip. The power consumption management circuit receives an activation signal, and controls at least one switch transistor to be turned on, so that the auxiliary source is powered on, and the auxiliary source supplies power to the main control chip. After the auxiliary source is powered on, the main control chip sends a maintenance signal to the power consumption management circuit, and the power consumption management circuit controls at least one switch transistor to be turned on, so that the auxiliary source continuously operates. When determining that an energy equalization requirement is completed or determining that a low power consumption mode needs to be entered, the main control chip sends a cut-off signal to the power consumption management circuit, and the power consumption management circuit controls at least one switch transistor to be turned off, so that the auxiliary source stops operating. The main control chip autonomously controls power-on/off of the auxiliary source through the power consumption management circuit. Therefore, power consumption management is flexible, and a system loss is reduced.

## Description

### CROSS-REFERENCE TO RELATED APPLICATIONS

This application claims priority to Chinese Patent Application No. 202310216356.8, filed on February 27, 2023 and named BATTERY EQUALIZATION CIRCUIT, ENERGY STORAGE APPARATUS, ENERGY STORAGE SYSTEM, AND EQUALIZATION CONTROL METHOD FOR ENERGY STORAGE SYSTEM, which is hereby incorporated by reference in its entirety.

### TECHNICAL FIELD

This application relates to the field of battery technologies, and in particular, to a battery equalization circuit, an energy storage apparatus, an energy storage system, and an equalization control method for the energy storage system.

### BACKGROUND

Lithium batteries have characteristics of high energy density and a long cycle life, and are widely used in fields of energy storage, electric vehicles, and power backup. A battery pack of a lithium battery in an energy storage system generally includes a cell group, a battery monitor unit (battery monitor unit, BMU), a battery equalization circuit, and the like. The battery equalization circuit usually uses an S1S2 board to implement equalization of charging and discharging of the battery pack. The S1S2 board includes switches or switch matrices connected in series and/or in parallel to the cell group. By controlling combinations of these switches, the S1S2 board is connected to a cell group of a battery pack in which the S1S2 board is located or a cell group of a bypass battery pack, to implement power equalization between a plurality of battery packs.

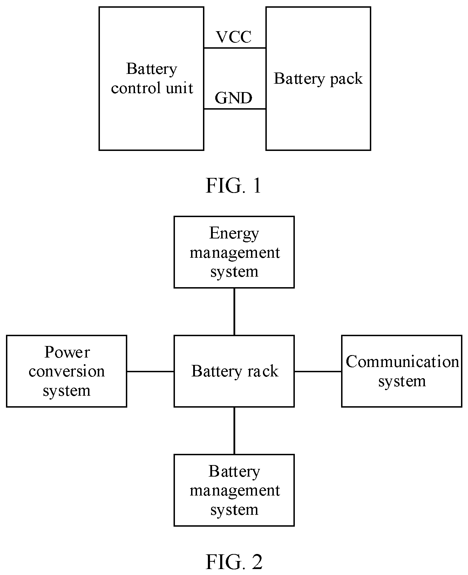

Refer to FIG. 1. In a conventional technical solution, a battery control unit (battery control unit, BCU) is disposed outside a battery equalization circuit, so that an auxiliary source that supplies power to the battery equalization circuit can supply power (mainly provides a VCC electrical signal), the BCU controls power-on/off of the battery equalization circuit, and the battery equalization circuit can enter a power-off state or a low power consumption state only after the BCU stops supplying power.

In the conventional technical solution, battery equalization circuits of all battery packs are completely controlled by the BCU in a unified manner. Therefore, independent power consumption management of the battery packs cannot be implemented, flexibility is low, and a system loss is increased.

### SUMMARY

This application provides a battery equalization circuit, an energy storage apparatus, an energy storage system, and an equalization control method for the energy storage system, to reduce power consumption of the energy storage apparatus in a standby state or a static state.

According to a first aspect, this application provides an energy storage apparatus. The energy storage apparatus may specifically include a cell group, an auxiliary source, a main power circuit, a power consumption management circuit, and a main control chip. The energy storage apparatus may further include a battery monitor unit, and the battery monitor unit is configured to collect a parameter such as an SOC of the cell group. Alternatively, a battery monitor unit may not be disposed in the energy storage apparatus, and an external battery control unit may directly sample a parameter such as an SOC of the energy storage apparatus. This is not limited herein. The main power circuit, the power consumption management circuit, and the main control chip may form a battery equalization circuit. The main power circuit generally includes a logic switch, and the main power circuit is configured to charge or discharge the cell group under control of the main control chip, to implement energy equalization. The power consumption management circuit is connected between the cell group and the auxiliary source, and the power consumption management circuit can implement management of controlling the cell group to supply power to the auxiliary source. When a system has an energy equalization requirement for the energy storage apparatus, a battery control unit sends an activation signal to the power consumption management circuit (when a battery monitor unit is disposed in the energy storage apparatus, the battery control unit sends the activation signal through the battery monitor unit). Specifically, the activation signal may be of a plurality of types, for example, may be a pulse signal or may be a square wave signal. This is not limited herein. When receiving the activation signal, the power consumption management circuit may control at least one switch transistor to be turned on, and the cell group supplies power to the auxiliary source to activate the auxiliary source, so that the auxiliary source is powered on. The auxiliary source is connected to the main control chip, and after the auxiliary source is powered on, the auxiliary source supplies power to the main control chip. To ensure that the main control chip keeps being in a power-on state, the main control chip sends a maintenance signal to the power consumption management circuit after the auxiliary source is powered on, and when receiving the maintenance signal sent by the main control chip, the power consumption management circuit may control at least one switch transistor to be turned on, so that the auxiliary source continuously operates, and the auxiliary source continuously supplies power to the main control chip. In the power-on state, the main control chip may wait for the battery control unit to send an equalization instruction, and after receiving the equalization instruction, the main control chip controls the main power circuit to complete an energy equalization requirement. If the main control chip does not receive the equalization instruction after being in the power-on state for set duration (there may be a plurality of reasons why the main control chip does not receive the equalization instruction, for example, a communication line is interrupted, and this is not limited herein), the main control chip may determine that a low power consumption mode needs to be entered. The main control chip sends a cut-off signal to the power consumption management circuit according to a set power consumption management policy. The power consumption management policy may be that, for example, the main control chip sends the cut-off signal to the power consumption management circuit when determining that the energy equalization requirement is completed or determining that the low power consumption mode needs to be entered. When the power consumption management circuit receives the cut-off signal sent by the main control chip, the main control chip controls at least one switch transistor to be turned off, so that the auxiliary source is powered off, that is, the auxiliary source stops operating, and the auxiliary source stops supplying power to the main control chip. In addition, after the main control chip is powered off, the main power circuit also stops operating, and the battery equalization circuit enters the low power consumption mode.

In the foregoing energy storage apparatus provided in embodiments of this application, the power consumption management circuit is disposed in the battery equalization circuit, so that the auxiliary source may be controlled to obtain power from the cell group in the energy storage apparatus, the power consumption management circuit may activate, under control of the activation signal, the auxiliary source to be powered on and operate, and subsequently, the energy storage apparatus may autonomously control power-on/off of the auxiliary source through the main control chip. Therefore, power consumption management is flexible, and a system loss is reduced.

In some embodiments of this application, the power consumption management circuit may specifically include an activation circuit, a first control circuit, and a second control circuit. The activation circuit is configured to: when receiving the activation signal, send a conduction signal to the first control circuit. The first control circuit 02 is configured to: when receiving the conduction signal, control at least one switch transistor to be turned on, so that the auxiliary source is electrically connected to the cell group. The second control circuit is configured to: when receiving the maintenance signal, control at least one switch transistor to be turned on, so that the auxiliary source and the cell group are continuously and electrically connected; and when receiving the cut-off signal, control at least one switch transistor to be turned off, so that the auxiliary source is disconnected from the cell group.

In some embodiments of this application, the power consumption management circuit may further include a first cell group port, a second cell group port, a first power supply port, and a second power supply port. The first cell group port is connected to an electrode end (for example, the electrode end may be a positive electrode) of the cell group, and the second cell group port is connected to the other electrode end (for example, the electrode end may be a negative electrode) of the cell group. The first power supply port is connected to one end of the auxiliary source, and the second power supply port is connected to the other end of the auxiliary source. The first cell group port is connected to the first power supply port. The activation circuit is connected to the first cell group port and the first control circuit. The first control circuit is connected between the second cell group port and the second power supply port, and the first control circuit is configured to: when receiving the conduction signal, electrically connect the second cell group port and the second power supply port, so that the auxiliary source is powered on. The second control circuit is connected between the second cell group port and the second power supply port. The second control circuit is configured to: when receiving the maintenance signal, continuously and electrically connect the second cell group port and the second power supply port, so that the auxiliary source continuously operates; and the second control circuit is configured to: when receiving the cut-off signal, disconnect the second cell group port from the second power supply port, so that the auxiliary source is powered off, that is, the auxiliary source stops operating.

A working principle of the foregoing power consumption management circuit provided in embodiments of this application is as follows: When the system has an energy equalization requirement for the energy storage apparatus, the battery control unit sends the activation signal to the activation circuit (when a battery monitor unit is disposed in the energy storage apparatus, the battery control unit sends the activation signal through the battery monitor unit). Specifically, the activation signal may be of a plurality of types, for example, may be a pulse signal or may be a square wave signal. This is not limited herein. When receiving the activation signal, the activation circuit may send the conduction signal to the first control circuit. When the first control circuit receives the conduction signal, the first control circuit electrically connects the second cell group port and the second power supply port, so that the auxiliary source is powered on. After the auxiliary source is powered on and supplies power to the main control chip, the main control chip starts to operate, and the main control chip sends the maintenance signal to the second control circuit. When receiving the maintenance signal sent by the main control chip, the second control circuit may continuously and electrically connect the second cell group port and the second power supply port, so that the auxiliary source continuously operates, and the auxiliary source continuously supplies power to the main control chip. In a power-on state, the main control chip may wait for the battery control unit to send an equalization instruction, and after receiving the equalization instruction, the main control chip controls the main power circuit to complete an energy equalization requirement. If the main control chip does not receive the equalization instruction after being in the power-on state for set duration, the main control chip may determine that the low power consumption mode needs to be entered. When the main control chip determines that the energy equalization requirement is completed or determines that the low power consumption mode needs to be entered, the main control chip sends the cut-off signal to the second management circuit. When receiving the cut-off signal sent by the main control chip, the second management circuit may disconnect the cell group from the auxiliary source, so that the auxiliary source is powered off, that is, the auxiliary source stops operating, and the auxiliary source stops supplying power to the main control chip. In addition, after the main control chip is powered off, the main power circuit also stops operating, and the battery equalization circuit enters the low power consumption mode.

In embodiments of this application, there may be a plurality of specific implementation structures of the activation circuit, the first control circuit, and the second control circuit in the power consumption management circuit. The following uses an example for description.

In some embodiments of this application, the activation circuit may specifically include a first resistor, a second resistor, and a first switch. One end of the first resistor may be connected to the first cell group port, and the other end of the first resistor is connected to an input end of the first switch. An output end of the first switch is connected to the first control circuit after being connected to the second resistor in series, and a control end of the first switch is configured to receive the activation signal. After receiving the activation signal at the control end, the first switch is in a turned-on state, and transmits, to the first control circuit, a conduction signal generated after a current from the first cell group port is limited and divided through the first resistor and the second resistor. When the first switch stops receiving the activation signal at the control end and is in an initial state, the first switch is in a cut-off state, that is, the first switch does not send the conduction signal to the first control circuit.

In some embodiments of this application, the first switch may be specifically an optocoupler isolator. The optocoupler isolator may specifically use a triode type or an MOS tube type for outputting. An initial state of a light emitting diode of the optocoupler isolator is in a reverse cut-off state, and a triode of an optoswitch is in a low current state or a cut-off state. When the optocoupler isolator receives the activation signal, the light emitting diode is turned on and the triode is turned on, so that the optocoupler isolator is in a conducted state.

Alternatively, in some other embodiments of this application, the first switch may be another isolator such as a magnetic coupling isolator or a capacitive coupler. The first switch is used as an isolator, to avoid impact of signal interference in the circuit on the activation circuit, and prevent the impact from affecting an output result of the activation circuit. In some scenarios with severe environmental interference, the first switch may be used to effectively avoid impact of interference on the power consumption management circuit.

In some other embodiments of this application, the first switch may alternatively be implemented by using a relay.

In some other embodiments of this application, when the battery equalization circuit and the energy storage apparatus are used in a scenario that does not require system control, for example, a power tool, the first switch is further used as a pushbutton switch to implement low power consumption of a standalone device.

In some embodiments of this application, the first control circuit may specifically include a third resistor, a fourth resistor, a capacitor, and a field effect transistor. A gate of the field effect transistor is connected to the activation circuit, a drain of the field effect transistor is connected to the second power supply port after being connected to the fourth resistor in series, and a source of the field effect transistor is connected to the second cell group port. The third resistor and the capacitor are connected in parallel, and are connected between the second cell group port and the gate of the field effect transistor. After receiving the conduction signal at the gate, the field effect transistor may be in a turned-on state, and the second cell group port and the second power supply port are electrically connected.

In some embodiments of this application, the second control circuit may specifically include a relay, a triode, a diode, a fifth resistor, and a sixth resistor. A first electrode of the triode is connected to the second power supply port, a second electrode of the triode is connected to a power signal end after being connected with to the diode in series, and a control electrode of the triode is connected to the sixth resistor in series and is configured to receive the cut-off signal or the maintenance signal. One end of the fifth resistor is connected to the power signal end, and the other end of the fifth resistor is configured to receive the cut-off signal or the maintenance signal. A control end of the relay is connected between the diode and the second electrode of the triode, an input end of the relay is connected to the second cell group port, and an output end of the relay is connected to the second power supply port. When the control electrode of the triode receives the maintenance signal through the sixth resistor connected to the triode in series, the triode is in a turned-on state, the relay may remain closed, and the second cell group port and the second power supply port are electrically connected. When the control electrode of the triode receives the cut-off signal through the sixth resistor connected to the triode in series, the triode is in a turned-off state, the relay may be triggered to be turned off, and the second cell group port is disconnected from the second power supply port.

In some other embodiments of this application, the second control circuit may alternatively include only a second switch; and an input end of the second switch is connected to the second cell group port, an output end of the second switch is connected to the second power supply port, and a control end of the second switch is configured to receive the cut-off signal or the maintenance signal. After receiving the maintenance signal at the control end, the second switch may be in a turned-on state, and the second cell group port and the second power supply port are electrically connected. After receiving the cut-off signal at the control end, the second switch may be in a cut-off state, and the second cell group port is disconnected from the second power supply port.

In some other embodiments of this application, the second switch may be implemented by using an insulated gate field effect transistor MOS. The second switch may alternatively be implemented by using an insulated gate bipolar transistor IGBT or a relay. This is not limited herein.

In some embodiments of this application, when the battery equalization circuit and the energy storage apparatus are used in a scenario that does not require system control, for example, a power tool, the second switch is further used as a pushbutton switch to implement low power consumption of a standalone device.

The energy storage apparatus provided in embodiments of this application may be widely used in an energy storage system such as a household energy storage system, an industrial and commercial energy storage system, or a power station energy storage system. The energy storage apparatus may further be used in a power battery and a power battery system in a power backup field, to implement low power consumption. This solution may also be applied to power tools.

According to a second aspect, this application provides an energy storage system. The energy storage system may include a battery rack including one or more energy storage apparatuses and a battery control unit. For a specific structure of the energy storage apparatus, refer to the first aspect. There is a communication line between the battery control unit and a battery equalization circuit of each energy storage apparatus. When determining that energy equalization control needs to be performed on an energy storage apparatus, the battery control unit may send signals such as an activation signal and an equalization instruction to the battery equalization circuit of the energy storage apparatus through the communication line. There is also a communication line between the battery control unit and a cell group of each energy storage apparatus, and the battery control unit may monitor a status (for example, a capacity status) of the cell group through the communication line. In each energy storage apparatus, a power line exists between the cell group and the battery equalization circuit, and a power line also exists between cell groups. The energy storage system may transmit energy through the power line, to implement energy equalization.

Further, the energy storage system may further include a power conversion system, an energy management system, a communication system, and the like. Details are not described herein again.

According to a third aspect, this application provides an equalization control method for an energy storage system, and the method may include the following steps.

A battery control unit may monitor a capacity status of each energy storage apparatus in a battery rack, for example, may detect an SOC value.

The battery control unit may determine, based on the capacity status of each energy storage apparatus, an energy storage apparatus whose capacity status is abnormal and that is in the battery rack. For example, when a deviation between an SOC value of the energy storage apparatus and a reference value is greater than a specified value TBD, it may be considered that the energy storage apparatus is abnormal, and energy equalization control is required.

The battery control unit sends an activation signal to a battery equalization circuit of the energy storage apparatus whose capacity status is abnormal, to activate an auxiliary source in the energy storage apparatus to be powered on, and the auxiliary source supplies power to the battery equalization circuit.

After the auxiliary source of the energy storage apparatus whose capacity status is abnormal is powered on, to ensure that a main control chip of the battery equalization circuit keeps being in a power-on state, the main control chip generates a maintenance signal, so that the auxiliary source continuously supplies power to the battery equalization circuit.

In the power-on state, the main control chip may wait for the battery control unit to send an equalization instruction, and after receiving the equalization instruction, the main control chip controls the main power circuit to complete an energy equalization requirement. If the main control chip does not receive the equalization instruction after being in the power-on state for set duration (there may be a plurality of reasons why the main control chip does not receive the equalization instruction, for example, a communication line is interrupted, and this is not limited herein), the main control chip may determine that a low power consumption mode needs to be entered.

The main control chip determines, according to a set power consumption management policy, whether the battery equalization circuit needs to enter the low power consumption mode. The power consumption management policy may be, for example, determining that an energy equalization requirement is completed or determining that the battery equalization circuit needs to enter the low power consumption mode.

When the battery equalization circuit needs to enter the low power consumption mode, the main control chip sends a cut-off signal to the power consumption management circuit. When receiving the cut-off signal sent by the main control chip, the power consumption management circuit may disconnect the cell group from the auxiliary source, so that the auxiliary source is powered off, and the auxiliary source stops supplying power to the main control chip. In addition, after the main control chip is powered off, the main power circuit also stops operating, and the battery equalization circuit enters the low power consumption mode.

In the foregoing equalization control method provided in embodiments of this application, a battery equalization circuit in each energy storage apparatus autonomously controls power-on/off of an auxiliary source, to perform energy equalization control, and there is no need to uniformly control power-on/off of the auxiliary source through a battery control unit. Therefore, power consumption of the system can be reduced.

According to a fourth aspect, this application provides a battery equalization circuit, including a power consumption management circuit, a main power circuit, and a main control chip. The main power circuit is configured to be connected to a cell group, the main control chip is configured to be connected to an auxiliary source, and the power consumption management circuit is configured to be connected between the cell group and the auxiliary source. The power consumption management circuit is configured to: when receiving an activation signal, control at least one switch transistor to be turned on, so that after the auxiliary source is powered on, the auxiliary source supplies power to the main control chip. The main control chip is configured to: after the auxiliary source is powered on, drive the main power circuit to operate, and send a maintenance signal to the power consumption management circuit, to control at least one switch transistor to be turned on, so that the auxiliary source continuously operates. The main control chip is configured to: after sending the maintenance signal, send a cut-off signal to the power consumption management circuit, to control at least one switch transistor to be turned off, so that the auxiliary source stops operating, and the main power circuit stops operating.

In some embodiments of this application, the power consumption management circuit may specifically include an activation circuit, a first control circuit, and a second control circuit. The activation circuit is configured to: when receiving the activation signal, send a conduction signal to the first control circuit. The first control circuit 02 is configured to: when receiving the conduction signal, control at least one switch transistor to be turned on, so that the auxiliary source is electrically connected to the cell group. The second control circuit is configured to: when receiving the maintenance signal, control at least one switch transistor to be turned on, so that the auxiliary source and the cell group are continuously and electrically connected; and when receiving the cut-off signal, control at least one switch transistor to be turned off, so that the auxiliary source is disconnected from the cell group.

In some embodiments of this application, the power consumption management circuit may further include a first cell group port, a second cell group port, a first power supply port, and a second power supply port. The first cell group port is connected to an electrode end (for example, the electrode end may be a positive electrode) of the cell group, and the second cell group port is connected to the other electrode end (for example, the electrode end may be a negative electrode) of the cell group. The first power supply port is connected to one end of the auxiliary source, and the second power supply port is connected to the other end of the auxiliary source. The first cell group port is connected to the first power supply port. The activation circuit is connected to the first cell group port. The first control circuit is connected between the second cell group port and the second power supply port, and the first control circuit is configured to: when receiving the conduction signal, electrically connect the second cell group port and the second power supply port, so that the auxiliary source is powered on. The second control circuit is connected between the second cell group port and the second power supply port. The second control circuit is configured to: when receiving the maintenance signal, continuously and electrically connect the second cell group port and the second power supply port, so that the auxiliary source continuously operates; and the second control circuit is configured to: when receiving the cut-off signal, disconnect the second cell group port from the second power supply port, so that the auxiliary source is powered off, that is, the auxiliary source stops operating.

A working principle of the foregoing power consumption management circuit provided in embodiments of this application is as follows: When the system has an energy equalization requirement for the energy storage apparatus, the battery control unit sends the activation signal to the activation circuit (when a battery monitor unit is disposed in the energy storage apparatus, the battery control unit sends the activation signal through the battery monitor unit). Specifically, the activation signal may be of a plurality of types, for example, may be a pulse signal or may be a square wave signal. This is not limited herein. When receiving the activation signal, the activation circuit may send the conduction signal to the first control circuit. When the first control circuit receives the conduction signal, the first control circuit electrically connects the second cell group port and the second power supply port, so that the auxiliary source is powered on. After the auxiliary source is powered on and supplies power to the main control chip, the main control chip starts to operate, and the main control chip sends the maintenance signal to the second control circuit. When receiving the maintenance signal sent by the main control chip, the second control circuit may continuously and electrically connect the second cell group port and the second power supply port, so that the auxiliary source continuously operates, and the auxiliary source continuously supplies power to the main control chip. In a power-on state, the main control chip may wait for the battery control unit to send an equalization instruction, and after receiving the equalization instruction, the main control chip controls the main power circuit to complete an energy equalization requirement. If the main control chip does not receive the equalization instruction after being in the power-on state for set duration, the main control chip may determine that a low power consumption mode needs to be entered. When the main control chip determines that the energy equalization requirement is completed or determines that the low power consumption mode needs to be entered, the main control chip sends the cut-off signal to the second management circuit. When receiving the cut-off signal sent by the main control chip, the second management circuit may disconnect the cell group from the auxiliary source, so that the auxiliary source is powered off, that is, the auxiliary source stops operating, and the auxiliary source stops supplying power to the main control chip. In addition, after the main control chip is powered off, the main power circuit also stops operating, and the battery equalization circuit enters the low power consumption mode.

In embodiments of this application, there may be a plurality of specific implementation structures of the activation circuit, the first control circuit, and the second control circuit in the power consumption management circuit. The following uses an example for description.

In some embodiments of this application, the activation circuit may specifically include a first resistor, a second resistor, and a first switch. One end of the first resistor may be connected to the first cell group port, and the other end of the first resistor is connected to an input end of the first switch. An output end of the first switch is connected to the first control circuit after being connected to the second resistor in series, and a control end of the first switch is configured to receive the activation signal. After receiving the activation signal at the control end, the first switch is in a turned-on state, and transmits, to the first control circuit, a conduction signal generated after a current from the first cell group port is limited and divided through the first resistor and the second resistor. When the first switch stops receiving the activation signal at the control end and is in an initial state, the first switch is in a cut-off state, that is, the first switch does not send the conduction signal to the first control circuit.

In some embodiments of this application, the first switch may be specifically an optocoupler isolator. The optocoupler isolator may specifically use a triode type or an MOS tube type for outputting. An initial state of a light emitting diode of the optocoupler isolator is in a reverse cut-off state, and a triode of an optoswitch is in a low current state or a cut-off state. When the optocoupler isolator receives the activation signal, the light emitting diode is turned on and the triode is turned on, so that the optocoupler isolator is in a conducted state.

Alternatively, in some other embodiments of this application, the first switch may be another isolator such as a magnetic coupling isolator or a capacitive coupler. The first switch is used as an isolator, to avoid impact of signal interference in the circuit on the activation circuit, and prevent the impact from affecting an output result of the activation circuit. In some scenarios with severe environmental interference, the first switch may be used to effectively avoid impact of interference on the power consumption management circuit.

In some other embodiments of this application, the first switch may alternatively be implemented by using a relay.

In some other embodiments of this application, when the battery equalization circuit and the energy storage apparatus are used in a scenario that does not require system control, for example, a power tool, the first switch is further used as a pushbutton switch to implement low power consumption of a standalone device.

In some embodiments of this application, the first control circuit may specifically include a third resistor, a fourth resistor, a capacitor, and a field effect transistor. A gate of the field effect transistor is connected to the activation circuit, a drain of the field effect transistor is connected to the second power supply port after being connected to the fourth resistor in series, and a source of the field effect transistor is connected to the second cell group port. The third resistor and the capacitor are connected in parallel, and are connected between the second cell group port and the gate of the field effect transistor. After receiving the conduction signal at the gate, the field effect transistor may be in a turned-on state, and the second cell group port and the second power supply port are electrically connected.

In some embodiments of this application, the second control circuit may specifically include a relay, a triode, a diode, a fifth resistor, and a sixth resistor. A first electrode of the triode is connected to the second power supply port, a second electrode of the triode is connected to a power signal end after being connected to the diode in series, and a control electrode of the triode is connected to the sixth resistor in series and is configured to receive the cut-off signal or the maintenance signal. One end of the fifth resistor is connected to the power signal end, and the other end of the fifth resistor is configured to receive the cut-off signal or the maintenance signal. A control end of the relay is connected between the diode and the second electrode of the triode, an input end of the relay is connected to the second cell group port, and an output end of the relay is connected to the second power supply port. When the control electrode of the triode receives the maintenance signal through the sixth resistor connected to the triode in series, the triode is in a turned-on state, the relay may remain closed, and the second cell group port and the second power supply port are electrically connected. When the control electrode of the triode receives the cut-off signal through the sixth resistor connected to the triode in series, the triode is in a turned-off state, the relay may be triggered to be turned off, and the second cell group port is disconnected from the second power supply port.

In some other embodiments of this application, the second control circuit may alternatively include only a second switch; and an input end of the second switch is connected to the second cell group port, an output end of the second switch is connected to the second power supply port, and a control end of the second switch is configured to receive the cut-off signal or the maintenance signal. After receiving the maintenance signal at the control end, the second switch may be in a turned-on state, and the second cell group port and the second power supply port are electrically connected. After receiving the cut-off signal at the control end, the second switch may be in a cut-off state, and the second cell group port is disconnected from the second power supply port.

In some other embodiments of this application, the second switch may be implemented by using an insulated gate field effect transistor MOS. The second switch may alternatively be implemented by using an insulated gate bipolar transistor IGBT or a relay. This is not limited herein.

In some embodiments of this application, when the battery equalization circuit and the energy storage apparatus are used in a scenario that does not require system control, for example, a power tool, the second switch is further used as a pushbutton switch to implement low power consumption of a standalone device.

For technical effects that can be achieved by any one of the possible designs of the second aspect or the third aspect, refer to technical effects that can be achieved by any one of the possible designs of the first aspect. Details are not described herein again. These aspects or other aspects of this application are clearer and more comprehensive in the following descriptions of embodiments.

### BRIEF DESCRIPTION OF DRAWINGS

To describe the technical solutions in embodiments of this application or in the background more clearly, the following describes the accompanying drawings for describing embodiments of this application or the background.
FIG. 1 is a schematic diagram of a power supply relationship between a battery pack and a battery control unit in a conventional technical solution;
FIG. 2 is a schematic diagram of a structure of a conventional energy storage system;
FIG. 3 is a schematic diagram of a structure of a conventional battery rack;
FIG. 4 is a schematic diagram of a structure of an energy storage apparatus according to an embodiment of this application;
FIG. 5 is a schematic diagram of a structure of a battery equalization circuit according to an embodiment of this application;
FIG. 6 is a schematic diagram of a structure of an energy storage system according to an embodiment of this application;
FIG. 7 is a schematic flowchart of an equalization control method for an energy storage system according to an embodiment of this application;
FIG. 8 is a schematic diagram of a structure of a power consumption management circuit according to an embodiment of this application;
FIG. 9 is a schematic diagram of a specific circuit structure of a power consumption management circuit according to an embodiment of this application;
FIG. 10 is a schematic diagram of another specific circuit structure of a power consumption management circuit according to an embodiment of this application; and
FIG. 11 is a schematic diagram of still another specific circuit structure of a power consumption management circuit according to an embodiment of this application.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner.

In addition, same reference numerals in the figures represent same or similar structures. Therefore, repeated description thereof is omitted. Expressions of positions and directions in this application are described by using the accompanying drawings as an example. However, changes may also be made as required, and all the changes fall within the protection scope of this application. The accompanying drawings in this application are merely used to illustrate relative position relationships and do not represent an actual scale.

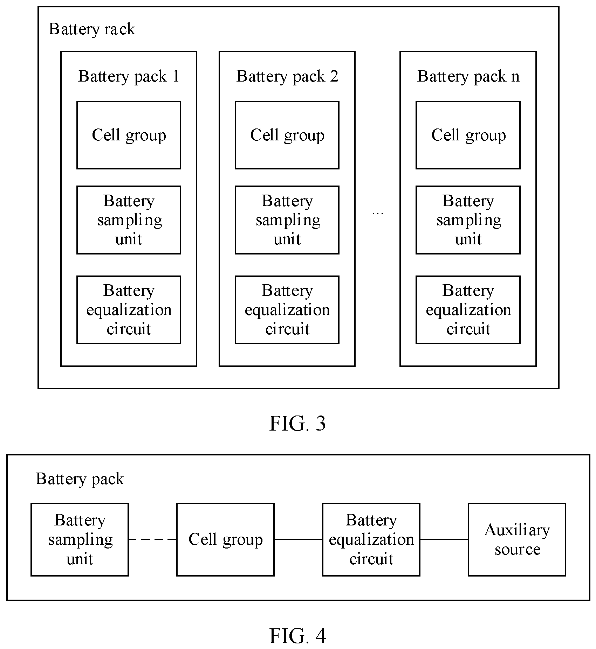

Refer to FIG. 2. A conventional energy storage system generally includes a battery rack, a battery management system, a power conversion system, an energy management system, a communication system, and the like. Refer to FIG. 3. The battery rack may specifically include one or more battery packs. The battery pack usually includes a cell group, a battery monitor unit, a battery equalization circuit, and the like. The battery management system may include a battery monitor unit and a battery control unit. The battery control unit may control the battery monitor unit to sample the cell group. For battery packs with different states of health (states of health, SOH) and states of charge (states of charge, SOC) in the battery rack, to implement multi-charging and multi-discharging of the battery packs, energy equalization between the battery packs needs to be performed, and this part of work, that is, energy equalization, is completed by the battery equalization circuit.

In a conventional technical solution, a battery control unit controls power-on/off of a battery equalization circuit, and the battery equalization circuit can enter a power-off state or a low power consumption state only after power is not supplied to the battery control unit.

In the conventional technical solution, battery equalization circuits of all battery packs are completely controlled by the battery control unit in a unified manner. Therefore, independent power consumption management of battery packs cannot be implemented, flexibility is low, and a system loss is increased.

The following describes in detail an energy storage apparatus, an energy storage system, and an equalization control method for the energy storage system provided in this application with reference to the accompanying drawings.

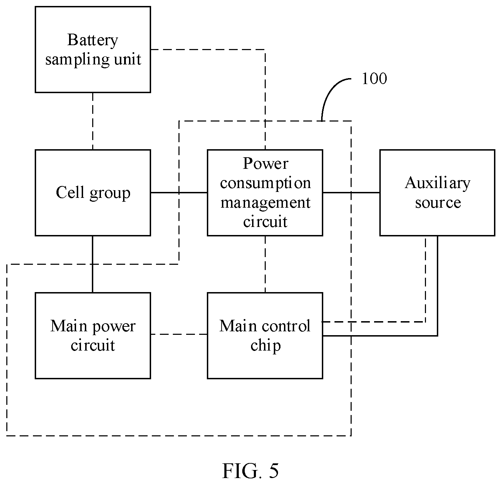

FIG. 4 shows an example of a schematic diagram of a structure of an energy storage apparatus according to an embodiment of this application. FIG. 5 shows an example of a schematic diagram of a structure of a battery equalization circuit according to an embodiment of this application.

Refer to FIG. 4. The energy storage apparatus provided in embodiments of this application may specifically include a cell group, a battery equalization circuit, and an auxiliary source. The energy storage apparatus may further include a battery monitor unit, and the battery monitor unit is configured to collect a parameter such as an SOC of the cell group. Alternatively, in some other embodiments of this application, a battery monitor unit may not be disposed in the energy storage apparatus, and an external battery control unit may directly sample a parameter such as an SOC of the energy storage apparatus. This is not limited herein.

Refer to FIG. 5. A battery equalization circuit 100 may specifically include a power consumption management circuit and a main control chip. The battery equalization circuit generally further includes a main power circuit connected to a cell group. The main power circuit generally includes a logic switch. The main power circuit is configured to charge or discharge the cell group under control of the main control chip, to implement energy equalization. The power consumption management circuit is connected between the cell group and the auxiliary source, and the power consumption management circuit can implement management of controlling the cell group to supply power to the auxiliary source. When a system has an energy equalization requirement for the energy storage apparatus, a battery control unit sends an activation signal to the power consumption management circuit (when a battery monitor unit is disposed in the energy storage apparatus, the battery control unit sends the activation signal through the battery monitor unit). Specifically, the activation signal may be of a plurality of types, for example, may be a pulse signal or may be a square wave signal. This is not limited herein. When receiving the activation signal, the power consumption management circuit may control at least one switch transistor to be turned on, and the cell group supplies power to the auxiliary source to activate the auxiliary source, so that the auxiliary source is powered on. The auxiliary source is connected to the main control chip, and after the auxiliary source is powered on, the auxiliary source supplies power to the main control chip. To ensure that the main control chip keeps being in a power-on state, the main control chip sends a maintenance signal to the power consumption management circuit after the auxiliary source is powered on, and when receiving the maintenance signal sent by the main control chip, the power consumption management circuit may control at least one switch transistor to be turned on, so that the auxiliary source continuously operates, and the auxiliary source continuously supplies power to the main control chip. In the power-on state, the main control chip may wait for the battery control unit to send an equalization instruction, and after receiving the equalization instruction, the main control chip controls the main power circuit to complete an energy equalization requirement. If the main control chip does not receive the equalization instruction after being in the power-on state for set duration (there may be a plurality of reasons why the main control chip does not receive the equalization instruction, for example, a communication line is interrupted, and this is not limited herein), the main control chip may determine that a low power consumption mode needs to be entered. The main control chip sends a cut-off signal to the power consumption management circuit according to a set power consumption management policy. The power consumption management policy may be that, for example, the main control chip sends the cut-off signal to the power consumption management circuit when determining that an energy equalization requirement is completed or determining that a low power consumption mode needs to be entered. When receiving the cut-off signal sent by the main control chip, the power consumption management circuit may control at least one switch transistor to be turned off, so that the auxiliary source is powered off, and the auxiliary source stops supplying power to the main control chip. In addition, after the main control chip is powered off, the main power circuit also stops operating, and the battery equalization circuit enters the low power consumption mode.

In the foregoing energy storage apparatus provided in embodiments of this application, the power consumption management circuit is disposed in the battery equalization circuit, so that the auxiliary source may be controlled to obtain power from the cell group in the energy storage apparatus, the power consumption management circuit may activate, under control of the activation signal, the auxiliary source to be powered on, and subsequently, the energy storage apparatus may autonomously control power-on/off of the auxiliary source through the main control chip. Therefore, power consumption management is flexible, and a system loss is reduced.

The energy storage apparatus provided in embodiments of this application may be widely used in an energy storage system such as a household energy storage system, an industrial and commercial energy storage system, or a power station energy storage system. The energy storage apparatus may further be used in a power battery and a power battery system in a power backup field, to implement low power consumption. This solution may also be applied to power tools.

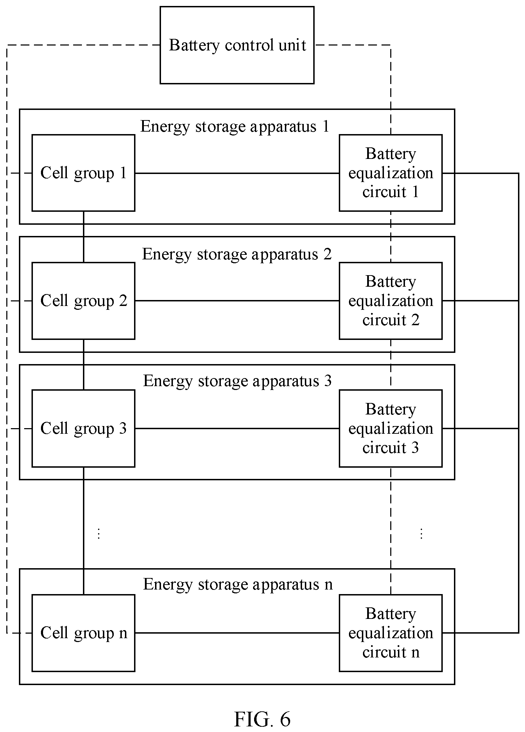

FIG. 6 shows an example of a schematic diagram of a structure of an energy storage system according to an embodiment of this application.

Refer to FIG. 6. When the energy storage apparatus provided in embodiments of this application is used in the energy storage system, the energy storage system may include a battery control unit and a battery rack including one or more energy storage apparatuses. There is a communication line (shown by a dashed line in the figure) between the battery control unit and a battery equalization circuit of each energy storage apparatus. When determining that energy equalization control needs to be performed on an energy storage apparatus, the battery control unit can send signals such as an activation signal and an equalization instruction to a battery equalization circuit of the energy storage apparatus through the communication line. There is also a communication line (shown by a dashed line in the figure) between the battery control unit and a cell group of each energy storage apparatus, and the battery control unit may monitor a status (for example, a capacity status) of the cell group through the communication line. In each energy storage apparatus, a power line (shown by a solid line in the figure) exists between the cell group and the battery equalization circuit, and a power line (shown by a solid line in the figure) also exists between cell groups. The energy storage system may transmit energy through the power line, to implement energy equalization.

Further, the energy storage system may further include a power conversion system, an energy management system, a communication system, and the like. Details are not described herein again.

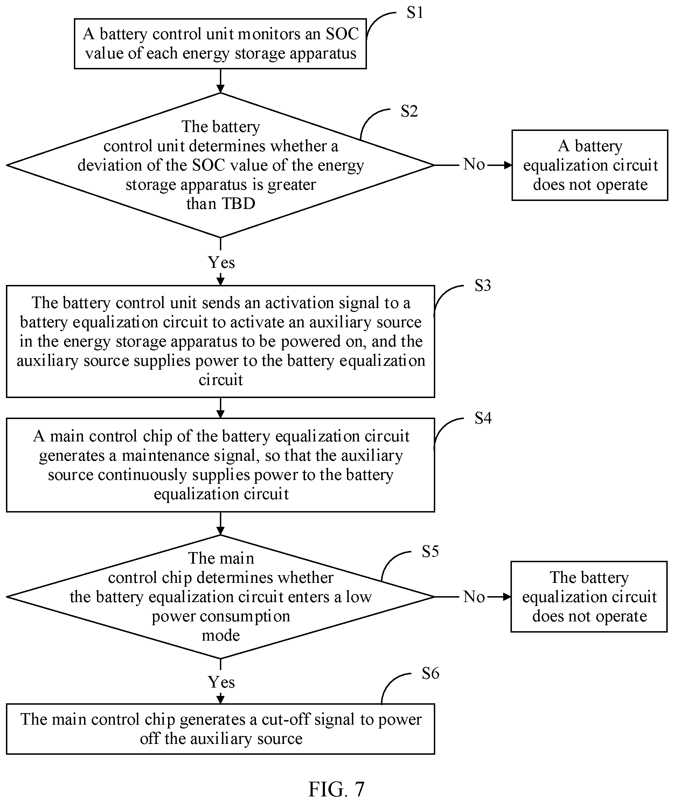

FIG. 7 shows an example of a schematic flowchart of an equalization control method for an energy storage system according to an embodiment of this application.

Refer to FIG. 7. The equalization control method for the energy storage system provided in this embodiment of this application may include the following steps.

S1: A battery control unit may monitor a capacity status of each energy storage apparatus in a battery rack, for example, may detect an SOC value.

S2: The battery control unit may determine, based on the capacity status of each energy storage apparatus, an energy storage apparatus whose capacity status is abnormal and that is in the battery rack. For example, when a deviation between the SOC value of the energy storage apparatus and a reference value is greater than a specified value TBD, it may be considered that the energy storage apparatus is abnormal, and energy equalization control is required.

S3: The battery control unit sends an activation signal to a battery equalization circuit of the energy storage apparatus whose capacity status is abnormal, to activate an auxiliary source in the energy storage apparatus to be powered on, and the auxiliary source supplies power to the battery equalization circuit.

S4: After the auxiliary source of the energy storage apparatus whose capacity status is abnormal is powered on, to ensure that a main control chip of the battery equalization circuit keeps being in a power-on state, the main control chip generates a maintenance signal, so that the auxiliary source continuously supplies power to the battery equalization circuit.

In the power-on state, the main control chip may wait for the battery control unit to send an equalization instruction, and after receiving the equalization instruction, the main control chip controls the main power circuit to complete an energy equalization requirement. If the main control chip does not receive the equalization instruction after being in the power-on state for set duration (there may be a plurality of reasons why the main control chip does not receive the equalization instruction, for example, a communication line is interrupted, and this is not limited herein), the main control chip may determine that a low power consumption mode needs to be entered.

S5: The main control chip determines, according to a set power consumption management policy, whether the battery equalization circuit needs to enter a low power consumption mode, where the power consumption management policy may be, for example, determining that an energy equalization requirement is completed or determining that the battery equalization circuit needs to enter the low power consumption mode.

S6: When the battery equalization circuit needs to enter the low power consumption mode, the main control chip sends a cut-off signal to a power consumption management circuit, and when receiving the cut-off signal sent by the main control chip, the power consumption management circuit may disconnect the cell group from the auxiliary source, so that the auxiliary source is powered off, and the auxiliary source stops supplying power to the main control chip. In addition, after the main control chip is powered off, the main power circuit also stops operating, and the battery equalization circuit enters the low power consumption mode.

In the foregoing equalization control method provided in embodiments of this application, a battery equalization circuit in each energy storage apparatus autonomously controls power-on/off of an auxiliary source, to perform energy equalization control, and there is no need to uniformly control power-on/off of the auxiliary source through a battery control unit. Therefore, power consumption of the system can be reduced.

The following describes in detail the energy storage apparatus and a structure of the power consumption management circuit in the energy storage apparatus provided in embodiments of this application.

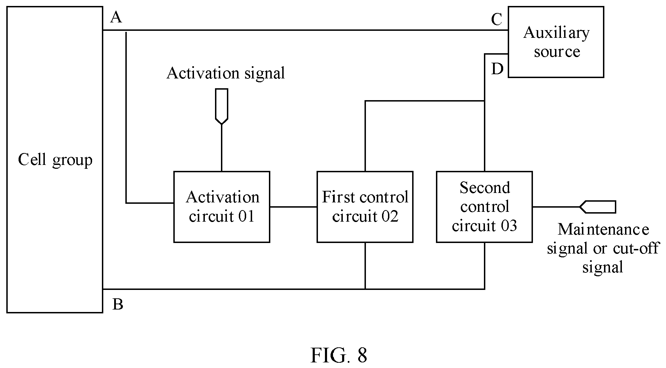

FIG. 8 is an example of a schematic diagram of a structure of a power consumption management circuit according to an embodiment of this application.

Refer to FIG. 8. In some embodiments of this application, the power consumption management circuit may specifically include an activation circuit 01, a first control circuit 02, and a second control circuit 03. The activation circuit 01 is configured to: when receiving an activation signal, send a conduction signal to the first control circuit 02. The first control circuit 02 is configured to: when receiving the conduction signal, control at least one switch transistor to be turned on, so that an auxiliary source is electrically connected to a cell group. The second control circuit 03 is configured to: when receiving a maintenance signal, control at least one switch transistor to be turned on, so that the auxiliary source and the cell group are continuously and electrically connected; and when receiving a cut-off signal, control at least one switch transistor to be turned off, so that the auxiliary source is disconnected from the cell group.

Refer to FIG. 8. Further, in some embodiments of this application, the power consumption management circuit may further include a first cell group port A, a second cell group port B, a first power supply port C, and a second power supply port D. The first cell group port A is connected to an electrode end (for example, the electrode end may be a positive electrode) of the cell group, and the second cell group port B is connected to the other electrode end (for example, the electrode end may be a negative electrode) of the cell group. The first power supply port C is connected to one end of the auxiliary source, and the second power supply port D is connected to the other end of the auxiliary source. The first cell group port A is connected to the first power supply port C. The activation circuit 01 is separately connected to the first cell group port A and the first control circuit 02. The first control circuit 02 is connected between the second cell group port B and the second power supply port D. When receiving the conduction signal, the first control circuit 02 may electrically connect the second cell group port B and the second power supply port D, so that the auxiliary source is powered on. The second control circuit 03 is connected between the second cell group port B and the second power supply port D. When receiving a maintenance signal, the second control circuit 03 may continuously and electrically connect the second cell group port B and the second power supply port D, so that the auxiliary source continuously operates; and when receiving a cut-off signal, the second control circuit 03 may disconnect the second cell group port B from the second power supply port D, so that the auxiliary source is powered off, that is, the auxiliary source stops operating.

A working principle of the foregoing power consumption management circuit provided in embodiments of this application is as follows: When a system has an energy equalization requirement for an energy storage apparatus, the battery control unit sends the activation signal to the activation circuit 01 (when a battery monitor unit is disposed in the energy storage apparatus, the battery control unit sends the activation signal through the battery monitor unit). Specifically, the activation signal may be of a plurality of types, for example, may be a pulse signal or may be a square wave signal. This is not limited herein. When receiving the activation signal, the activation circuit 01 may send a conduction signal to the first control circuit 02. When receiving the conduction signal, the first control circuit 02 electrically connects the second cell group port B and the second power supply port D, so that the auxiliary source is powered on. After the auxiliary source is powered on and supplies power to the main control chip, the main control chip starts to operate, and the main control chip sends a maintenance signal to the second control circuit 03. When receiving the maintenance signal sent by the main control chip, the second control circuit 03 may continuously and electrically connect the second cell group port B and the second power supply port D, so that the auxiliary source continuously operates, and the auxiliary source continuously supplies power to the main control chip. In a power-on state, the main control chip may wait for the battery control unit to send an equalization instruction, and after receiving the equalization instruction, the main control chip controls the main power circuit to complete an energy equalization requirement. If the main control chip does not receive the equalization instruction after being in the power-on state for set duration, the main control chip may determine that the low power consumption mode needs to be entered. When the main control chip determines that the energy equalization requirement is completed or determines that the low power consumption mode needs to be entered, the main control chip sends a cut-off signal to the second management circuit 03. When receiving the cut-off signal sent by the main control chip, the second management circuit 03 may disconnect the cell group from the auxiliary source, so that the auxiliary source is powered off, that is, the auxiliary source stops operating, and the auxiliary source stops supplying power to the main control chip. In addition, after the main control chip is powered off, the main power circuit also stops operating, and the battery equalization circuit enters the low power consumption mode.

In embodiments of this application, there may be a plurality of specific implementation structures of the activation circuit 01, the first control circuit 02, and the second control circuit 03 in the power consumption management circuit. The following uses an example for description.

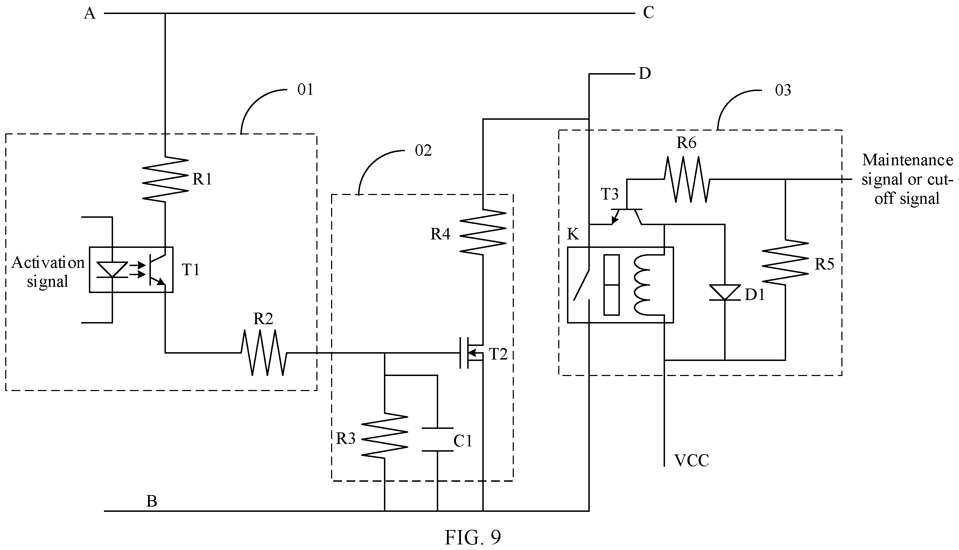

FIG. 9 is an example of a schematic diagram of a specific circuit structure of a power consumption management circuit according to an embodiment of this application.

Refer to FIG. 9. In some embodiments of this application, the activation circuit 01 may specifically include a first resistor R1, a second resistor R2, and a first switch T1. One end of the first resistor R1 may be connected to the first cell group port A, and the other end of the first resistor R1 is connected to an input end of the first switch T1. An output end of the first switch T1 is connected to the first control circuit after being connected to the second resistor R2 in series, and a control end of the first switch T1 is configured to receive the activation signal. After receiving the activation signal at the control end, the first switch T1 is in a turned-on state, and transmits, to the first control circuit, a conduction signal generated after a current from the first cell group port A is limited and divided through the first resistor R1 and the second resistor R2. When the first switch T1 stops receiving the activation signal at the control end and is in an initial state, the first switch T1 is in a cut-off state, that is, the first switch T1 does not send the conduction signal to the first control circuit 02.

Refer to FIG. 9. In some embodiments of this application, the first switch T1 may be specifically an optocoupler isolator. The optocoupler isolator may specifically use a triode type or an MOS tube type for outputting. In FIG. 9, an example in which the optocoupler isolator uses a triode type for outputting is used. An initial state of a light emitting diode of the optocoupler isolator is in a reverse cut-off state, and a triode of an optoswitch is in a low current state or a cut-off state. When the optocoupler isolator receives the activation signal, the light emitting diode is turned on and the triode is turned on, so that the optocoupler isolator is in a conducted state.

Alternatively, in some other embodiments of this application, the first switch T1 may be another isolator such as a magnetic coupling isolator or a capacitive coupler. The first switch T1 is used as an isolator, to avoid impact of signal interference in the circuit on the activation circuit, and prevent the impact from affecting an output result of the activation circuit. In some scenarios with severe environmental interference, the first switch T1 may be used to effectively avoid impact of interference on the power consumption management circuit.

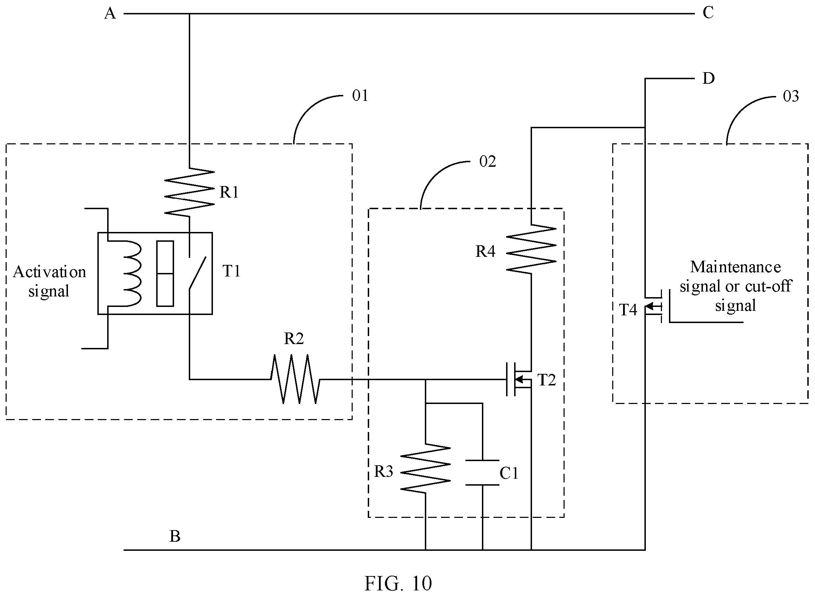

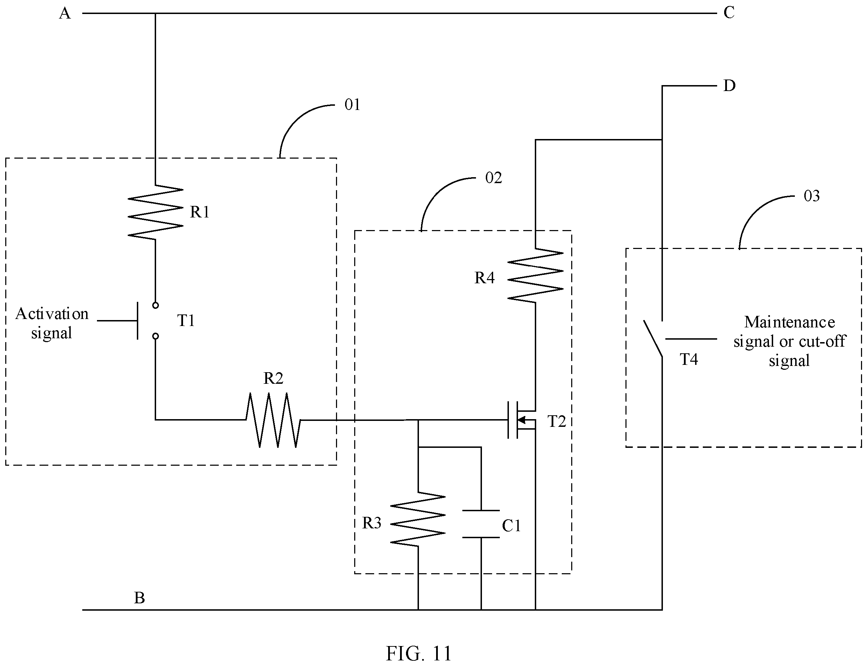

FIG. 10 is an example of a schematic diagram of another specific circuit structure of a power consumption management circuit according to an embodiment of this application. FIG. 11 is an example of a schematic diagram of still another specific circuit structure of a power consumption management circuit according to an embodiment of this application.

Refer to FIG. 10. In some other embodiments of this application, the first switch T1 may alternatively be implemented by using a relay.

Refer to FIG. 11. In some other embodiments of this application, when the battery equalization circuit and the energy storage apparatus are used in a scenario that does not require system control, for example, a power tool, the first switch T1 is further used as a pushbutton switch to implement low power consumption of a standalone device.

Refer to FIG. 9 to FIG. 11. In some embodiments of this application, the first control circuit 02 may specifically include a third resistor R3, a fourth resistor R4, a capacitor C1, and a field effect transistor T2. A gate of the field effect transistor T2 is connected to the activation circuit, a drain of the field effect transistor T2 is connected to the second power supply port D after being connected to the fourth resistor R4 in series, and a source of the field effect transistor T2 is connected to the second cell group port B. The third resistor R3 and the capacitor C1 are connected in parallel, and are connected between the second cell group port B and the gate of the field effect transistor T2. After receiving the conduction signal at the gate, the field effect transistor T2 may be in a turned-on state, and the second cell group port B and the second power supply port D are electrically connected.

Refer to FIG. 9. In some embodiments of this application, the second control circuit 03 may specifically include a relay K, a triode T3, a diode D1, a fifth resistor R5, and a sixth resistor R6. A first electrode of the triode T3 is connected to the second power supply port D, a second electrode of the triode T3 is connected to a power signal end VCC after being connected to the diode D1 in series, and a control electrode of the triode T3 is connected to the sixth resistor R6 in series and is configured to receive the cut-off signal or the maintenance signal. One end of the fifth resistor R5 is connected to a power signal end VCC, and the other end of the fifth resistor R5 is configured to receive the cut-off signal or the maintenance signal. A control end of the relay K is connected between the diode D1 and the second electrode of the triode T3, an input end of the relay K is connected to the second cell group port B, and an output end of the relay K is connected to the second power supply port D. When the control electrode of the triode T3 receives the maintenance signal through the sixth resistor R5 connected to the triode T3 in series, the triode is in a turned-on state, the relay K may remain closed, and the second cell group port B and the second power supply port D are electrically connected. When the control electrode of the triode T3 receives the cut-off signal through the sixth resistor R5 connected to the triode T3 in series, the triode is in a turned-off state, and the relay K may be triggered to be disconnected, and the second cell group port B and the second power supply port D are disconnected.

Refer to FIG. 10 and FIG. 11. In some other embodiments of this application, the second control circuit 03 may include only a second switch T4; and an input end of the second switch T4 is connected to the second cell group port B, an output end of the second switch T4 is connected to the second power supply port D, and a control end of the second switch T4 is configured to receive the cut-off signal or the maintenance signal. After receiving the maintenance signal at the control end, the second switch T4 may be in a turned-on state, and the second cell group port B and the second power supply port D are electrically connected. After receiving the cut-off signal at the control end, the second switch T4 may be in a cut-off state, and the second cell group port B is disconnected from the second power supply port D.

Refer to FIG. 10. In some other embodiments of this application, the second switch T4 may be implemented by using an insulated gate field effect transistor MOS. The second switch T4 may alternatively be implemented by using an insulated gate bipolar transistor IGBT or a relay. This is not limited herein.

Refer to FIG. 11. In some embodiments of this application, when the battery equalization circuit and the energy storage apparatus are used in a scenario that does not require system control, for example, a power tool, the second switch T4 is further used as a pushbutton switch to implement low power consumption of a standalone device.

According to the battery equalization circuit, the energy storage apparatus, the energy storage system, and the equalization control method for the energy storage system provided in embodiments of this application, the power consumption management circuit is disposed in the battery equalization circuit, so that the auxiliary source may be controlled to obtain power from the cell group in the energy storage apparatus, the power consumption management circuit may activate, under control of an external activation signal, the auxiliary source to be powered on and operate, and subsequently, the energy storage apparatus may autonomously control power-on/off of the auxiliary source through the main control chip. Therefore, power consumption management is flexible, and a system loss is reduced.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. An energy storage apparatus, comprising a cell group, an auxiliary source, a power consumption management circuit, a main power circuit, and a main control chip, wherein
the main power circuit is connected to the cell group, the main control chip is connected to the auxiliary source, and the power consumption management circuit is connected between the cell group and the auxiliary source;
the power consumption management circuit includes at least one switch transistor, which is configured to: when receiving an activation signal, control the at least one switch transistor to be turned on, so that after the auxiliary source is powered on, the auxiliary source supplies power to the main control chip;
the main control chip is configured to: after the auxiliary source is powered on, send a maintenance signal to the power consumption management circuit, to control the at least one switch transistor to be turned on, so that the auxiliary source continuously operates; and
the main control chip is configured to: after sending the maintenance signal, send a cut-off signal to the power consumption management circuit, to control the at least one switch transistor to be turned off, so that the auxiliary source stops operating.

2. The energy storage apparatus according to claim 1, wherein the power consumption management circuit comprises an activation circuit, a first control circuit, and a second control circuit;
the activation circuit is configured to: when receiving the activation signal, send a conduction signal to the first control circuit;
the first control circuit is configured to: when receiving the conduction signal, control the at least one switch transistor to be turned on, so that the auxiliary source is electrically connected to the cell group; and
the second control circuit is configured to: when receiving the maintenance signal, control the at least one switch transistor to be turned on, so that the auxiliary source and the cell group are continuously and electrically connected; and when receiving the cut-off signal, control the at least one switch transistor to be turned off, so that the auxiliary source is disconnected from the cell group.

3. The energy storage apparatus according to claim 2, wherein the power consumption management circuit further comprises a first cell group port, a second cell group port, a first power supply port, and a second power supply port;
the first cell group port is connected to an electrode end of the cell group, and the second cell group port is connected to the other electrode end of the cell group; the first power supply port is connected to one end of the auxiliary source, and the second power supply port is connected to the other end of the auxiliary source; and the first cell group port is connected to the first power supply port; and
the activation circuit is connected to the first cell group port, the first control circuit is connected between the second cell group port and the second power supply port, and the second control circuit is connected between the second cell group port and the second power supply port.

4. The energy storage apparatus according to claim 3, wherein the activation circuit comprises a first resistor, a second resistor, and a first switch;
one end of the first resistor is connected to the first cell group port, and the other end of the first resistor is connected to an input end of the first switch; and
an output end of the first switch is connected to the first control circuit after being connected to the second resistor in series, and a control end of the first switch is configured to receive the activation signal.

5. The energy storage apparatus according to claim 4, wherein the first switch is a pushbutton switch, a relay, an optocoupler isolator, a magnetic coupling isolator, or a capacitive coupler.

6. The energy storage apparatus according to any one of claims 3 to 5, wherein the first control circuit comprises a third resistor, a fourth resistor, a capacitor, and a field effect transistor;
a gate of the field effect transistor is connected to the activation circuit, a drain of the field effect transistor is connected to the second power supply port after being connected to the fourth resistor in series, and a source of the field effect transistor is connected to the second cell group port; and
the third resistor and the capacitor are connected in parallel, and are connected between the second cell group port and the gate of the field effect transistor.

7. The energy storage apparatus according to any one of claims 3 to 6, wherein the second control circuit comprises a relay, a triode, a diode, a fifth resistor, and a sixth resistor;
a first electrode of the triode is connected to the second power supply port, a second electrode of the triode is connected to a power signal end after being connected to the diode in series, and a control electrode of the triode is connected to the sixth resistor in series and is configured to receive the cut-off signal or the maintenance signal;
one end of the fifth resistor is connected to the power signal end, and the other end of the fifth resistor is configured to receive the cut-off signal or the maintenance signal; and
a control end of the relay is connected between the second electrode of the triode and the diode, an input end of the relay is connected to the second cell group port, and an output end of the relay is connected to the second power supply port.

8. The energy storage apparatus according to any one of claims 3 to 6, wherein the second control circuit comprises a second switch; and an input end of the second switch is connected to the second cell group port, an output end of the second switch is connected to the second power supply port, and a control end of the second switch is configured to receive the cut-off signal or the maintenance signal.

9. The energy storage apparatus according to claim 8, wherein the second switch is a pushbutton switch, a relay, an insulated gate bipolar transistor IGBT, or an insulated gate field effect transistor MOS.

10. The energy storage apparatus according to any one of claims 1 to 9, further comprising a battery monitor unit; and
the battery monitor unit is configured to receive the activation signal and send the activation signal to the power consumption management circuit.

11. An energy storage system, comprising a battery rack and a battery control unit, wherein the battery rack comprises one or more energy storage apparatuses, and the battery control unit is configured to send an activation signal to each energy storage apparatus;
the energy storage apparatus comprises a cell group, an auxiliary source, a power consumption management circuit, a main power circuit, and a main control chip;
the main power circuit is connected to the cell group, the main control chip is connected to the auxiliary source, and the power consumption management circuit is connected between the cell group and the auxiliary source;
the power consumption management circuit includes at least one switch transistor, which is configured to: when receiving the activation signal, control the at least one switch transistor to be turned on, so that after the auxiliary source is powered on, the auxiliary source supplies power to the main control chip;
the main control chip is configured to: after the auxiliary source is powered on, send a maintenance signal to the power consumption management circuit, to control the at least one switch transistor to be turned on, so that the auxiliary source continuously operates; and
the main control chip is configured to: after sending the maintenance signal, send a cut-off signal to the power consumption management circuit, to control the at least one switch transistor to be turned off, so that the auxiliary source stops operating.

12. The energy storage system according to claim 11, further comprising at least one of the following: a power conversion system, an energy management system, and a communication system.

13. An equalization control method for an energy storage system, wherein the equalization control method comprises:
monitoring, by a battery control unit, a capacity status of each energy storage apparatus in a battery rack;
determining, by the battery control unit, an energy storage apparatus whose capacity status is abnormal and that is in the battery rack, and sending an activation signal to a battery equalization circuit of the energy storage apparatus whose capacity status is abnormal, so that an auxiliary source of the energy storage apparatus whose capacity status is abnormal is powered on, and the auxiliary source supplies power to the battery equalization circuit;
generating, by a main control chip of the battery equalization circuit, a maintenance signal after the auxiliary source of the energy storage apparatus whose capacity status is abnormal is powered on, so that the auxiliary source continuously supplies power to the battery equalization circuit; and
generating, by the main control chip, a cut-off signal after sending the maintenance signal, so that the auxiliary source is powered off.

14. A battery equalization circuit, comprising a power consumption management circuit, a main power circuit, and a main control chip, wherein
the main power circuit is configured to be connected to a cell group, the main control chip is configured to be connected to an auxiliary source, and the power consumption management circuit is configured to be connected between the cell group and the auxiliary source;
the power consumption management circuit includes at least one switch transistor, which is configured to: when receiving an activation signal, control the at least one switch transistor to be turned on, so that after the auxiliary source is powered on, the auxiliary source supplies power to the main control chip;
the main control chip is configured to: after the auxiliary source is powered on, drive the main power circuit to operate, and send a maintenance signal to the power consumption management circuit, to control the at least one switch transistor to be turned on, so that the auxiliary source continuously operates; and
the main control chip is configured to: after sending the maintenance signal, send a cut-off signal to the power consumption management circuit, to control the at least one switch transistor to be turned off, so that the auxiliary source stops operating, and the main power circuit stops operating.

15. The battery equalization circuit according to claim 14, wherein the power consumption management circuit comprises an activation circuit, a first control circuit, and a second control circuit;
the activation circuit is configured to: when receiving the activation signal, send a conduction signal to the first control circuit;
the first control circuit is configured to: when receiving the conduction signal, control at least one switch transistor to be turned on, so that the auxiliary source is electrically connected to the cell group; and
the second control circuit is configured to: when receiving the maintenance signal, control at least one switch transistor to be turned on, so that the auxiliary source and the cell group are continuously and electrically connected; and when receiving the cut-off signal, control at least one switch transistor to be turned off, so that the auxiliary source is disconnected from the cell group.

16. The battery equalization circuit according to claim 15, wherein the power consumption management circuit further comprises a first cell group port, a second cell group port, a first power supply port, and a second power supply port;
the first cell group port is configured to be connected to an electrode end of the cell group, and the second cell group port is configured to be connected to the other electrode end of the cell group; the first power supply port is configured to be connected to one end of the auxiliary source, and the second power supply port is configured to be connected to the other end of the auxiliary source; and the first cell group port is connected to the first power supply port; and
the activation circuit is connected to the first cell group port, the first control circuit is connected between the second cell group port and the second power supply port, and the second control circuit is connected between the second cell group port and the second power supply port.

17. The battery equalization circuit according to claim 16, wherein the activation circuit comprises a first resistor, a second resistor, and a first switch;
one end of the first resistor is connected to the first cell group port, and the other end of the first resistor is connected to an input end of the first switch; and
an output end of the first switch is connected to the first control circuit after being connected to the second resistor in series, and a control end of the first switch is configured to receive the activation signal.

18. The battery equalization circuit according to claim 17, wherein the first switch is a pushbutton switch, a relay, an optocoupler isolator, a magnetic coupling isolator, or a capacitive coupler.

19. The battery equalization circuit according to any one of claims 16 to 18, wherein the first control circuit comprises a third resistor, a fourth resistor, a capacitor, and a field effect transistor;
a gate of the field effect transistor is connected to the activation circuit, a drain of the field effect transistor is connected to the second power supply port after being connected to the fourth resistor in series, and a source of the field effect transistor is connected to the second cell group port; and
the third resistor and the capacitor are connected in parallel, and are connected between the second cell group port and the gate of the field effect transistor.

20. The battery equalization circuit according to any one of claims 16 to 19, wherein the second control circuit comprises a relay, a triode, a diode, a fifth resistor, and a sixth resistor;
a first electrode of the triode is connected to the second power supply port, a second electrode of the triode is connected to a power signal end after being connected to the diode in series, and a control electrode of the triode is connected to the sixth resistor in series and is configured to receive the cut-off signal or the maintenance signal;
one end of the fifth resistor is connected to the power signal end, and the other end of the fifth resistor is configured to receive the cut-off signal or the maintenance signal; and
a control end of the relay is connected between the second electrode of the triode and the diode, an input end of the relay is connected to the second cell group port, and an output end of the relay is configured to be connected to the second power supply port.

21. The battery equalization circuit according to any one of claims 16 to 20, wherein the second control circuit comprises a second switch; and an input end of the second switch is connected to the second cell group port, an output end of the second switch is connected to the second power supply port, and a control end of the second switch is configured to receive the cut-off signal or the maintenance signal.

22. The battery equalization circuit according to claim 21, wherein the second switch is a pushbutton switch, a relay, an insulated gate bipolar transistor IGBT, or an insulated gate field effect transistor MOS.
